# EUROPEAN PATENT APPLICATION

(11) **EP 3 919 694 A1**
(43) Date of publication of application: **08.12.2021**
(21) Application number: 21173885.1
(22) Date of filing: 14.05.2021
(51) Int. Cl.: E03B 3/03, E04C 2/34, E03B 1/04, E04B 1/343

(54) **SYSTEM, METHOD, MODULAR PREFABRICATED WATER TANK, DEVELOPED FOR FULL ARCHITECTURAL INTEGRATION INTO WALLS**

(30) Priority: 03.06.2020 IT 202000013078; 03.06.2020 IT 202000003076 U
(71) Applicant: Coslovi Longo, Christian, 98039 Taormina (IT)
(72) Inventor: Coslovi Longo, Christian, 98039 Taormina (IT)
(74) Representative: Emmi, Mario

(57) **Abstract**

The invention relates to an innovative water storage system, developed for full architectural integration into walls, in buildings and/or outdoor spaces, for both new and renovated constructions, capable of optimizing the use of space and at the same time proposing a structure of a highly versatile modular prefabricated wall, consisting of a steel frame with a reduced thickness, high-density polyethylene water tank inserted inside it, equipped with integrated connecting pipes, possible fittings for the insertion of probes and/or a float valve, which can be easily installed individually or in series inside external perimeter walls, internal partition walls or walls in external spaces, particularly suitable for the storage of water at atmospheric pressure.

The invention also relates to a method for its embodiment and for the series connection of several modules.

The invention is mainly intended for the construction sector and eco-sustainable technologies.

## Description

### Scope of the invention

The present invention relates to the building sector and more specifically to the sector of the construction of water storage systems serving buildings and/or outdoor spaces, mainly to obtain water reserves at atmospheric pressure for different types of application, such as: rainwater storage, surface water storage, groundwater storage, wastewater storage, fire-fighting water reserve, drinking water reserve, compensation water storage for swimming pools, water reserve for various technological uses or for production cycles.

In the case of uses that envisage the recovery and/or recycling of water resources, the present invention also relates to the eco-sustainable technologies sector and can contribute to improving the environmental balance of the building-plant system. Furthermore, the present invention also relates to the prefabricated buildings sector.

### Overview of the prior art

The use of water tanks to obtain a reserve of water to serve buildings and/or outdoor spaces is commonly known. The knowledge and technical ability to construct water storage tanks has been and will always be fundamental for the satisfaction of requirements, for the development and progress of humanity and, in most of the planet's urban settings and geographical areas, to ensure survival in particular climatic and/or man-made conditions.

Even in ancient times, tanks set up on site inside buildings, for example through the construction of tanks or cisterns with stone or brick walls, were used to store often very large quantities of water, while earthenware or wooden artifacts, for example, were used to store smaller quantities of water.

Subsequently, with the evolution of technology and production systems on an industrial scale that has taken place in contemporary times and especially in recent decades, the production of modular prefabricated water tanks and monobloc water tanks has been developed extensively. When compared to the on-site construction of tanks or cisterns, these have the advantages of rapid construction, a wide choice of dimensions and characteristics, flexibility of use and configurability, and ease of integration into existing buildings, together with very competitive costs.

Most of the monobloc tanks available on the market come in sizes that can be used for small and medium storage capacities, while the modular prefabricated water tanks can also be used for large storage capacities.

That said, although tanks constructed on site, such as reinforced concrete conglomerate tanks, or tanks installed on site with modular prefabricated elements, are currently preferred to obtain medium and large capacity water storage for servicing buildings and/or outdoor spaces, there is nevertheless an ever-increasing interest in monobloc water storage tanks, not only for small water capacities, but also for medium-sized water capacities, by connecting several units together until the overall required water capacity is reached. Furthermore, monobloc water tanks are usually cheaper and are easy to transport and install even in existing buildings.

There is, therefore, a range of water storage capacities and a range of applications in which monobloc water tanks can compete or be preferable over other types of tanks.

Another aspect to consider is that water storage systems serving buildings and/or outdoor spaces usually store water at atmospheric pressure. Furthermore, the stored water can come from various supply sources and may require pre- and/or post-treatment.

That said, with reference to the present invention, the subject of interest is only the state of the art of monobloc water tanks are comparable to the invention, including but not limited to, the sizes of water capacity available on the market and the possibility of installation by connecting several units together.

Numerous models and types of monobloc tanks are currently available on the market, with various sizes, shapes and capacities, as well as a variety of characteristics. For example, they may or may not be suitable for storing water for human consumption; they may or may not be suitable for underground installation; they may be designed for installation in technical rooms or outdoors; or may be produced with different types of materials.

As for the construction characteristics of the monobloc tanks available on the market, they can essentially be divided into: prefabricated monobloc tanks made of reinforced concrete, for example, which have very high empty weights in relation to the weight of the volume of water they can contain and also have a thicker and more bulky casing; monobloc tanks produced with materials such as stainless steel, hot galvanized steel, high-density polyethylene, which have very light empty weights in relation to the weight of the volume of water they can contain and also have a much thinner casing. The first type usually has a parallelepiped shape and is mainly used for underground installations or on bases capable of withstanding high loads per unit of surface. The second, more versatile, type usually has a cylindrical or parallelepiped shape and is mainly used for installation in technical rooms, on terraces, on roofs, directly on the ground, underground or on external bases. The second type also has the advantage of greater integration into existing floors, especially for models that use lighter materials such as high-density polyethylene.

With respect to the numerous models and types of monobloc water tanks available on the market, only a small proportion include products designed to meet particular dimensional and/or aesthetic requirements. In this regard, there are several models of monobloc tank designed for outdoor installation with particular aesthetic features, such as in the shape of a jar or barrel for installation in gardens. Another example concerns numerous models designed to adapt to specific internal spaces or technical rooms, in which the shape of the tank has a greater distribution of the volume on the floor, on the wall or vertically.

However, the prior art described has some disadvantages.

In the case of installation inside buildings, space must be found inside technical rooms or, alternatively, in other rooms, with the consequent loss of floor area that could be used for other purposes. In the case of installation outside buildings, in addition to the need to find the space, there may be problems of aesthetic integration and compatibility with the landscape, especially when the availability of a particular water capacity is required by connecting several tanks together, a disadvantage that cannot always be overcome by using visual shields. Sufficient internal, external or underground spaces for the required water storage capacity may not always be available.

All the aforementioned solutions require dedicated installation spaces, in addition to the spaces available inside the building envelope or other internal or external walls, and solutions for their total integration within the building elements may not therefore be available.

Furthermore, in some situations it may not be possible to store a particular volume of water per unit of surface on existing or newly built floors, for static reasons. Considering that the weight of one cubic meter of water alone exerts a load of one thousand kilograms per square meter of surface, and that the floors of civil buildings are often designed with much lower accidental loads, for example of two hundred kilograms per square meter of surface, the integration of monobloc tanks on existing floors has many limitations.

A further drawback of the prior art described is the lack of suitable connections for modular construction, for example with regard to the distances normally needed to connect several monobloc tanks together, and therefore the non-optimal spatial integration, measurable as the ratio between the volume of water storage capacity and the technical volume necessary to install the entire system.

A further drawback of the prior art described, in the case of the embodiment of a system with several tanks connected to each other, is the use of screw-on or quick-connect fittings, which need to be accessible for inspection and, if necessary, easily repairable or replaceable, therefore accessibility to all components must always be ensured.

Another problem when several modules are connected together is that the tanks normally need to be centralized in a single technical room in order to obtain a medium water storage capacity; such space may not always be available or it may be very inconvenient as it cannot be used for other purposes. In this case, a further drawback of the prior art described is the limited flexibility for applications in which it is necessary, or more convenient, to decentralize the volumes of stored water.

The publications JP2008082037 and KR101713962 are also known.

### Summary of the invention

The object of the present invention is to overcome the drawbacks of the prior art.

In particular, the aim of the present invention is to realize an innovative water storage system, which allows water to be stored inside external perimeter walls or internal partition walls in buildings or inside walls placed in external spaces, so as to obtain full architectural integration.

Another object of the present invention is to allow several modules to be connected in series, minimizing the interconnection distances in a simple and reliable way.

Another object of the present invention is to propose a process for connecting several tanks in series, in order to avoid the need to provide suitable inspection shafts.

Another object of the present invention is to allow the full architectural integration of a water storage system within building elements, such as vertical construction elements, in which all the devices necessary for the control, supervision and automation of the filling, usage and emptying processes can be integrated.

Another object of the present invention is to allow the realization of a water storage system with modules which have both the function of a reservoir and the function of a modular wall structure, for the construction of walls in buildings and/or external spaces.

Another object of the present invention is to propose a method for its manufacture and installation.

Another object of the present invention is to integrate in a single modular element a water storage tank and a prefabricated wall structure, capable of integrating all the systems necessary for the operation of the present invention and all the systems that are normally integrated into walls, such as electrical systems, water systems, heating systems, air conditioning systems and ventilation systems.

Another object of the present invention is to integrate in a single modular element a water storage tank and a prefabricated wall structure, capable of integrating panels for thermal and acoustic insulation, as well as other types of panels with functions of closing and finishing the external casing of the single module or of the wall of modules connected in series.

Another object of the present invention is to integrate in a single modular element a water storage tank and a prefabricated wall structure with low empty weight, to make it easy to transport and install on site both with respect to prefabricated monobloc tanks of the known types and to modular walls of the known types.

Another object of the present invention is to integrate in a single modular element a water storage tank and a prefabricated wall structure which, in maximum fill conditions and with the same performance and thicknesses, has an overall weight per square meter of a smaller wall than the traditional walls of the known types, made for example with perforated or solid building block masonry or with solid brick masonry.

Another object of the invention is to provide a water storage system inside walls which, with the same water storage capacity and performance, has reduced thickness and is fully integrated architecturally with respect to the prefabricated monobloc tanks of the known types.

Another object of the invention is to integrate in a single modular element a water storage tank and a prefabricated wall structure, capable of decentralizing and extending to the building elements, such as the vertical construction elements, the possibility of storing water, in the buildings and/or outdoor spaces.

Yet another object of the invention is to favor the insertion, both in existing buildings and in new constructions, of systems for the recovery and reuse of water resources, in order to improve the environmental balance of the building-plant system.

Yet another very important object of the invention is to propose a modular prefabricated water tank developed for full architectural integration in walls, which can be produced with the use of known technologies.

The technical task and the specified objects are substantially achieved with the present invention, comprising the technical characteristics set out in one or more of the attached claims, consisting of a modular prefabricated water tank developed for full architectural integration in walls (both horizontal and vertical walls), consisting of a frame, preferably made of steel, with a water tank inserted inside, preferably made of high-density polyethylene, of reduced thickness with integrated connecting pipes, possible fittings for the insertion of probes and/or a float valve, which can be easily installed individually or in series inside external perimeter walls, internal partition walls or walls in external spaces, particularly suitable for the storage of water at atmospheric pressure, in accordance with claim 1.

Furthermore, the venting function can be advantageously performed by the connecting pipes located in the highest position of the tank or, in the event of use under pressure, by vents of the known types.

The invention was also devised to propose an innovative water storage system inside walls and a method for the hydraulic connection in series of several tanks made of high-density polyethylene, for example, by connecting pipes integrated with electro-weldable sleeves of the known types, suitable for creating a totally airtight and sufficiently elastic system in relation to possible expansion phenomena and to the foreseeable static and dynamic pressure forces.

The invention also relates to a method for manufacturing a module, according to the process, by way of example but not limited to, of forming both the case and the cover of the steel frame according to the prior art by extrusion.

The prior art by extrusion can also be used to make the tank in high-density polyethylene, including the pipes integrated therein, and incorporating, where necessary, any other devices of the known types, such as, for example, a float valve and/or probes of known types. The tank may also be equipped with rubber gaskets, for example as a lining for the holes through which the tubular spacers of the case pass. Once the three basic components, namely the frame case, the frame cover and the tank have been made, the tank can be inserted into the case, by inserting the tubular spacers into the holes of the tank and the module can then be locked and completed with the application of the cover, screwing it with self-locking screws or bolts of the known types or by spot welding.

Alternatively, the six walls of the frame can be obtained by cutting and drilling steel sheets according to the desired design, and then welding the five surfaces that make up the case, then welding the tubular spacers onto the case, inserting the tank and securing the cover.

For the installation, a method is provided for anchoring to the building structures, for example horizontal, by means of holes in the frame that allow the insertion, for example, of anchor bolts of the known types, while side holes are provided on the frame between the modules connected in series to allow for connection with bolts and nuts of the known types.

With respect to the state of the prior art, the present invention allows the use, for the realization of water storage systems, of the spaces and, consequently, the volumes available inside walls, in buildings and/or external spaces. For example, in any building, the gross volume share of the external envelope is significant relative to the vertical surfaces and the internal partition walls for example, and storage volumes can consequently be made available that are much greater than those normally required and/or installed on the basis of reference design parameters, such as, for example, cubic meters per inhabitant equivalent, or cubic meters per unit of useful surface.

The present invention allows to obtain full architectural integration, given that tanks with greatly reduced thicknesses can be installed which are fully integrated inside the walls, for example inside cavities or replacing masonry, with the further advantage of eliminating the need to find useful floor space in specific internal or external technical rooms. Furthermore, it is a valid alternative when there are no indoor or outdoor spaces available, nor outdoor spaces that can be used for underground installation.

The present invention also allows the module's water storage capacity to be combined with the function of a prefabricated wall structure, by means of the structural characteristics of the steel frame. Furthermore, the invention is designed to be easily installed in conjunction with thermal, acoustic and closing insulation panels, with an architectural and aesthetic finishing function, and so as to constitute a convenient support for housing technological systems that are normally passed through and/or integrated into walls.

A further advantage of the present invention is constituted by the possibility of static integration in both new and renovated constructions, particularly as an element for external perimeter walls, due to the possibility of making modules with thicknesses and characteristics such as to guarantee, even under maximum filling conditions, weights per square meter of wall surface that are significantly lower than traditional walls of the known types, for example made with masonry of perforated or solid building blocks or with solid brick masonry.

A further advantage of the present invention is constituted by the possibility of using the thermal capacity of the volume of water stored in the walls to store heating or cooling energy, in order to support the building's heating/energy systems and contribute to improving the overall energy performance of the building-plant system. For example, it would be possible to integrate into the tank, or in the system of tanks connected in series, hydraulic circuits that are either closed (for example coils of the known types) or open (for example dedicated connecting pipes), capable of supplying or removing heat or cold from the volume of water. More specifically, it would be possible to connect a tank, or a system of tanks connected in series, to hot/chilled water generation plants of the known types, solar thermal collectors of the known types, distribution circuits of heating/cooling plant terminals, or to other systems/installations dedicated to meeting the building's energy needs.

Further advantages of the invention consist of: ease of transport and installation; affordability; fittings for modular connection by means of connectors made with electro-weldable sleeves, in order to avoid the need to create inspection and maintenance shafts; easy integration of probes, for example temperature and/or level probes; easy integration of a float valve for automatic filling; easy integration of automatic air vents of the known types; full architectural integration and resolution of aesthetic problems; full landscape integration in the event of installation in outdoor spaces; use as a system for the recovery and reuse of water resources; easy integration with building control and home automation systems; ease of production of the invention starting from known methods.

The object of the present invention is therefore a modular prefabricated water tank developed for full architectural integration into walls (10), comprising a steel frame (11) constituting the modular wall structure and an integrated water tank (12) of reduced thickness made of high-density polyethylene, characterized by the fact that it optimizes the use of spaces and at the same time proposes a very versatile modular prefabricated wall structure equipped with integrated water storage, is easily installed individually or in series inside external perimeter walls, internal partition walls and walls in external spaces, and is particularly suitable for the storage of water at atmospheric pressure.

Advantageously, said frame (11) consists of a cover (11a) and a case (11b) in which there are tubular spacers (16), all parts to be understood as being able to be made of metal materials, with shapes, sections and production methods, such as by extrusion.

Furthermore, said tank (12) comprises upper (18a) and (18b) and lower (19a) and (19b) connecting pipes, an additional pipe (20), fittings for the insertion of one or more probes (21), holes (22) lined with rubber gaskets (23) through which the tubular spacers (16) pass in order to allow the tank (12) to be housed inside the case (11b) of the frame (11).

Advantageously, fitting for the connection of vent pipes or for the insertion of automatic vents of known types (21a) can also be included.

Preferably said holes (22) can be in the form of transverse channels (22).

Advantageously, the cover (11a) can have the shape of a rectangular sheet of reduced thickness, with a structural mesh interspersed with lightening apertures (15), equipped with holes (13) of a circular shape and centered with the tubular spacers (16) of the case (11b), and which can be fastened to the case (11b) by means of self-locking screws or bolts or by spot welding.

Advantageously, the case (11b) can be box-shaped and composed of five rectangular-shaped sheets of reduced thickness, with a structural mesh interspersed with lightening apertures (15), equipped on the upper and lower sides with holes (17) allowing it to be anchored to horizontal building elements, equipped on the right and left sides with holes (14) to allow it to be connected in series to other modules (10), and equipped with tubular spacers (16), in correspondence with which the fastening of the cover (11a) occurs.

Advantageously, the spacers (16) can have a tubular shape with internal thread suitable to allow the cover (11a) to be fastened to the case (11b) with self-locking screws or bolts, to be considered usable also as a support for the spot welding of the cover (11a) and achievable with different sections and characteristics.

Advantageously, the tank (12) can be made:
- with one or more upper integrated connecting pipes (18a, 18b);
- with one or more lower integrated connecting pipes (19a, 19b);
- with holes (22) suitable for it to be inserted in the case (11b) of the frame (11) through the insertion of the tubular spacers (16);
- with gaskets (23) made of rubber, for example EPDM, suitable for lining the external face of the holes (22) to facilitate the insertion of the tubular spacers (16);
- with an additional integrated connecting pipe (20) to allow automatic filling by means of a float valve;
- with fittings for the insertion of one or more probes (21), for example level and/or temperature probes, or air vent pipes/devices (21a);
- with materials, shapes, sections, pipe diameters, configurations and different production methods, for example by extrusion.

A method for making a modular prefabricated water tank (10) according to one or more of the characteristics indicated above is also described here, characterized by the fact of forming the parts of the frame (11) and the tank (12) by extrusion, lining the external face of the holes (22) of the tank (12) with rubber gaskets (23), inserting the tank (12) in the case (11b) by inserting tubular spacers (16) into the holes (22) of the tank (12) lined with gaskets (23), and fastening the cover (11a), by screwing with self-locking screws or bolts or by spot welding, or, alternatively, the six walls of the frame (11) can be obtained by cutting and drilling steel sheets according to the desired design, and then welding the five surfaces that make up the case (11b), then welding the tubular spacers (16) onto the case (11b), inserting the tank (12) and fastening the cover (11a).

Advantageously, a method for the series connection of several modular prefabricated water tank modules (10) with one or more of the previously indicated characteristics is also described here, characterized by the fact that the integrated pipes (18a) (18b) (19a) (19b) (20) in the tank (12) can be connected with electro-weldable sleeves (24) of various diameters and characteristics.

Finally, the present invention also relates to a method for manufacturing a modular prefabricated water tank (10) according to one or more of the characteristics indicated above, characterized by the fact of integrating the following elements into the frame:
- a sheet of thermal insulation material (26) plus a sheet of plasterboard (25) on the inward facing side of a building;
- a sheet of thermal insulation material (27) plus an exterior finishing panel (28) on the outward facing side of a building;
- technical rooms (29) for the integration of technological wall systems;
- closing panels (30).

### Brief description of the drawings

The invention is described in detail, based on the description of a preferred but not exclusive embodiment, which is schematically illustrated by way of example and by no means exhaustively in the attached figures, in which:
- Figure 1 schematically shows, in axonometric view, a modular prefabricated water tank module developed for full architectural integration in walls (10), consisting of:
- a steel frame (11) constituting the modular wall structure;
- an integrated water tank (12) of reduced thickness made of high-density polyethylene.
- Figure 2 schematically shows, in axonometric view, the cover (11a) of the frame (11).
- Figure 3 shows an enlarged detail, in axonometric view, of the cover (11a) of the frame (11).
- Figure 4 schematically shows, in axonometric view, the case (11b) of the frame (11).
- Figure 5 shows an enlarged detail, in axonometric view, of the case (11b) of the frame (11).
- Figure 6 schematically shows, in axonometric view, the tank (12).
- Figure 7 is a sectional view, according to the longitudinal section VII-VII, of the tank (12).
- Figure 7A is an axonometric section view, according to the longitudinal section VII-VII, of the tank (12).
- Figure 7B shows an enlarged detail, in axonometric section view, of the tank (12).
- Figure 8 shows an enlarged detail, in axonometric view, of the tank (12).

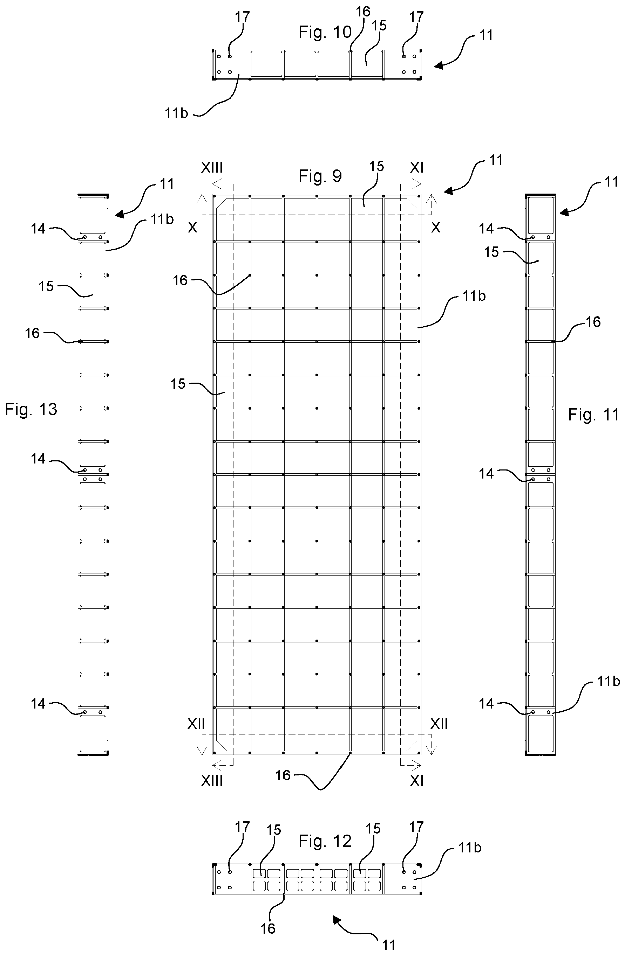

- Figure 9 is a front view of the interior of the case (11b) of the frame (11).
- Figure 10 is a sectional view, according to section X-X, of the upper internal side of the case (11b) of the frame (11).
- Figure 11 is a sectional view, according to section XI-XI, of the right internal side of the case (11b) of the frame (11).
- Figure 12 is a sectional view, according to section XII-XII, of the lower internal side of the case (11b) of the frame (11).
- Figure 13 is a sectional view, according to section XIII-XIII, of the left internal side of the case (11b) of the frame (11).

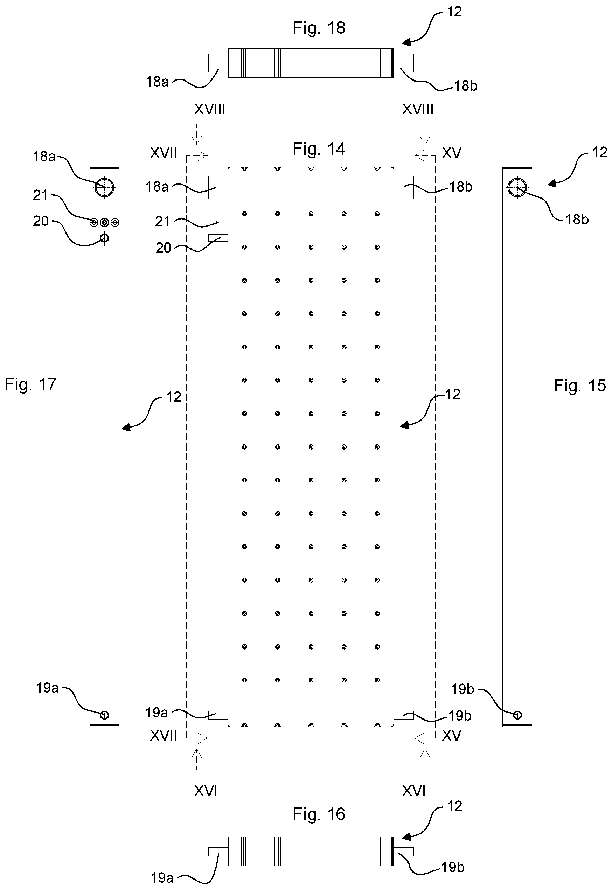

- Figure 14 is a front view of the tank (12).
- Figure 15 is a perspective view, according to the XV-XV view, of the right side of the tank (12).
- Figure 16 is a perspective view, according to the XVI-XVI view, of the lower side of the tank (12).
- Figure 17 is a perspective view, according to the XVII-XVII view, of the left side of the tank (12).
- Figure 18 is a perspective view, according to the XVIII-XVIII view, of the upper side of the tank (12).
- Figure 19 schematically shows, in front perspective view, an example of two tanks (12a) and (12b) connected in series.
- Figure 20 schematically shows, in axonometric view, an example of two modules (10a) and (10b) installed in series for the construction of an external perimeter wall of a building.
- Figure 21 schematically shows, in axonometric view, an example of two modules (10a) and (10b) installed in series for the construction of a partition wall.
- Figure 22 schematically shows, in axonometric view, an example of closing panels of the upper sides of two modules installed in series (10a) and (10b) for the construction of a partition wall.
- Figure 23 schematically shows, in axonometric view, an example of a closing panel of the right side of the module (10b) installed in series for the construction of a partition wall.
- Figure 24 schematically shows, in axonometric view, an example of a closing panel of the left side of the module installed in series (10a) for the construction of a partition wall.
- Figure 25 schematically shows, in axonometric view, an example of two modules (10a) (10b) connected in series, where the external walls of the frame are made with wooden panels and where the only apertures (15a) are of a technical type (not for lightening) and are used for the passage of pipes/systems.

### Description of some preferred embodiments

With reference to the aforementioned figures, a modular prefabricated water tank module developed for full architectural integration in walls according to the invention is indicated as a whole with the number (10) and is composed of: a steel frame (11) constituting the modular wall structure; an integrated water tank (12) of reduced thickness made of high-density polyethylene.

The module (10) has an overall parallelepiped shape with reduced thickness, in order to be integrated into walls, buildings and/or outdoor spaces.

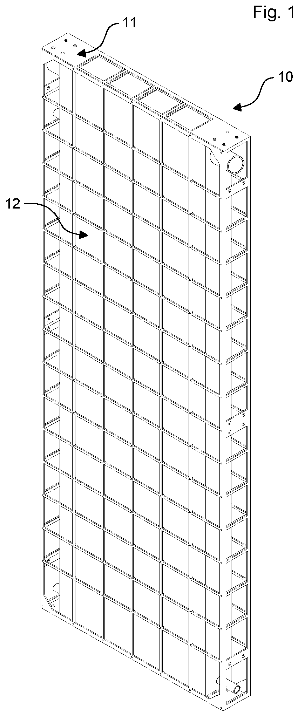

In this description, thickness means the depth of the object. In particular, with reference to Figure 1, the parallelepiped shape of the module comprises a rectangular base from which the walls rise in height. The rectangular base has a longer side and a shorter side that represents the depth and therefore the so-called thickness.

Overall thicknesses of the module (the shorter side of the rectangular base) should preferably be within a range of 5 cm to 30 cm, in order to be well integrated within walls, whether vertical or horizontal.

The structure of two components forming the module, that is the frame and the tank placed in the frame, will now be described in more detail.

### DESCRIPTION OF THE FRAME:

The frame (11) is composed of two elements, both preferably made of steel:
- a front cover (11a);
- a case (11b).

The dimensions and characteristics of the frame (11) may vary according to requirements. The material for the frame (11) is preferably stainless steel or alternatively hot-dip galvanized steel, although other suitably sized materials can also be used.

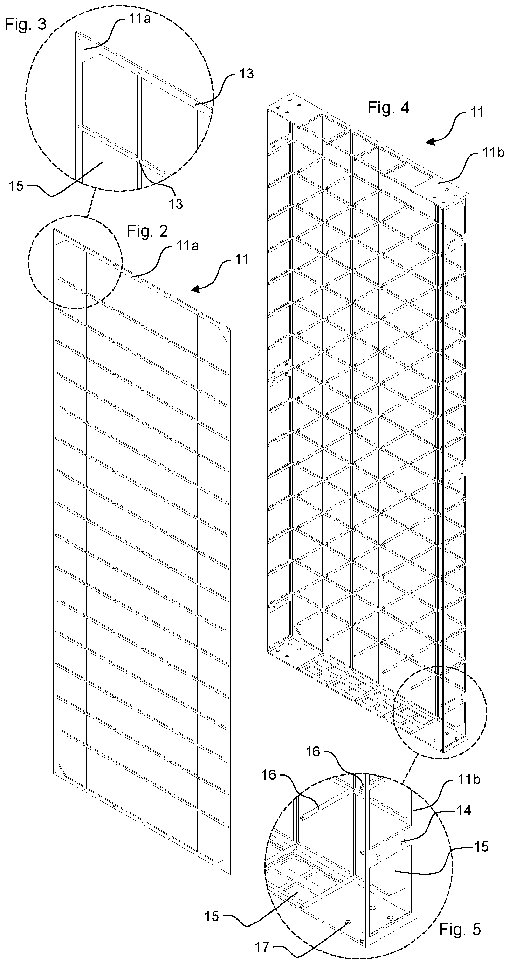

As shown in Figures 2-4, the case is open at the front so that the front cover (11a) can be used to close the case.

The case is generally box-like in shape and therefore includes a rear wall (generally rectangular in shape) and four side walls that each rise orthogonally from one side of the rear wall, as clearly shown in figure 4.

A plurality of tubular spacers 16 in the shape of pipes or pins which rise orthogonally from said rear wall of the case and whose function is described immediately below is distributed inside the area of the rear wall.

Going into the descriptive detail of the invention, the cover (11a) is characterized by an element in the shape of a rectangular sheet (see Figure 2), having a reduced thickness.

Also in this case the thickness is understood as its depth, similar to that of the entire module. The thicknesses can be of the order of a millimeter or even less.

However, for sheets in non-metallic materials such as wood, panels with a thickness even greater than 10 mm could be used, while the thicknesses would certainly be a few millimeters or even less if metallic materials are used.

The sheet, in the case of a metal sheet, for example, is preferably made in the form of a structural mesh interspersed with apertures 15 having a lightening function and distributed over its surface.

The construction of a continuous sheet, preferably with materials such as wood (therefore a wooden panel) is not excluded.

The cover is fastened to the case to form the frame as a whole, which is a sort of cage in which the tank has been previously placed, as will be explained below.

The cover can be fastened to the case in various ways.

For example, holes 13 can be made in the cover (11a) (see for example Figure 3) to allow said rigid fastening with the case (11b), in order to make the frame (11).

The holes are distributed over the frame in points that match and are aligned with the tubular spacers 16 which in turn form threaded channels.

In this way, in one possible solution of the invention, the cover (11a) can be fastened to the case (11b) with self-locking screws or bolts of the known types, for example, which are inserted into the holes 13 and then penetrate the channels of the tubular spacers which are aligned with the holes 13 when the cover is applied to the case.

For this purpose the holes 13 in the cover (11a) are made in a circular shape and centered with the tubular spacers 16 of the case (11b).

The tubular spacers 16 can be made with internal threading for fastening the cover (11a) to the case (11b) with self-locking screws or bolts of the known types or with spot welding.

The tubular spacers can be cylindrical in shape, as well represented in Figure 5, for example, but they can also have a parallelepiped shape.

Other solutions are therefore possible with reference to the shape, dimensions, characteristics and fastening methods of the spacers 16, as well as with reference to the materials used for making said spacers 16 and the frame 11.

Welding is an example of an alternative type of joint.

In the event of welding, in particular, the holes 13 can be replaced with continuous material and the tubular spacers can also not be hollow, i.e. they do not need to form a threaded seat, since they can simply act as a surface on which to apply a welding tip that will connect each spacer to the cover at the welding point.

In the case of a mesh cover, as indicated in Figure 3, the holes 13 are preferably distributed in such a way as to be positioned also at the intersections of the meshes.

In the case of integrated installation in the external perimeter walls of buildings, the cover (11a), is normally turned towards the internal side.

As already introduced above, the case (11b) of the frame 11 is characterized by a box-shaped element, composed of five rectangular-shaped sheets, having reduced thickness, in which a structural mesh is made, interspersed with apertures 15 having a lightening function. In the case of integrated installation in the external perimeter walls of buildings, the side with the largest surface (i.e. the rear side from which the spacers 16 rise), is normally turned towards the external side.

As shown for example in detail in figure 5, holes (17) are made on the upper and lower sides of the case (11b) to allow anchoring to horizontal building elements, while holes (14) are made on the right and left sides to allow several modules (10) to be possibly joined in series.

Initial means of anchoring are therefore provided, preferably in the form of the aforementioned holes 17, through which the frame (and therefore the module) is fastened to the load-bearing structure for which it is intended. The second means of anchoring can, for example, be the screws which are inserted into the holes.

The anchors, through the holes 17 made on the upper and lower sides of the case (11b), can be made, for example, with chemical anchoring bolts and with nuts of the known types. Optional fixed or adjustable spacers of the known types may be used to compensate for the free distance between the upper side of the case (11b) and the horizontal building structure on which the module (10) is to be anchored, but other solutions are possible to fasten the modules to the building structure according to the type of material constituting the frame.

Suitably prepared and leveled surfaces are recommended for the lower laying surface of the case (11b), which bears the entire weight of the module (10), especially in full conditions.

A frame can be connected in series to another frame by connection means such as screws or bolts which are applied to the aforementioned holes 14.

The modules 10 can be connected in series, by means of the holes 14 made on the right and left sides of the case (11b), with bolts and nuts of the known types, for example, but other solutions are possible, including spot welding.

The tubular spacers 16 are a very important element of the case (11b); they have the function of closing the case (11b) with the cover (11a) in a stable and solid way, and the function of supporting the load of the tank 12 when full and supporting the counter-thrust exerted by the hydrostatic pressure on the internal walls of the tank, as clarified immediately below in the description of the tank.

### STRUCTURAL DESCRIPTION OF THE TANK:

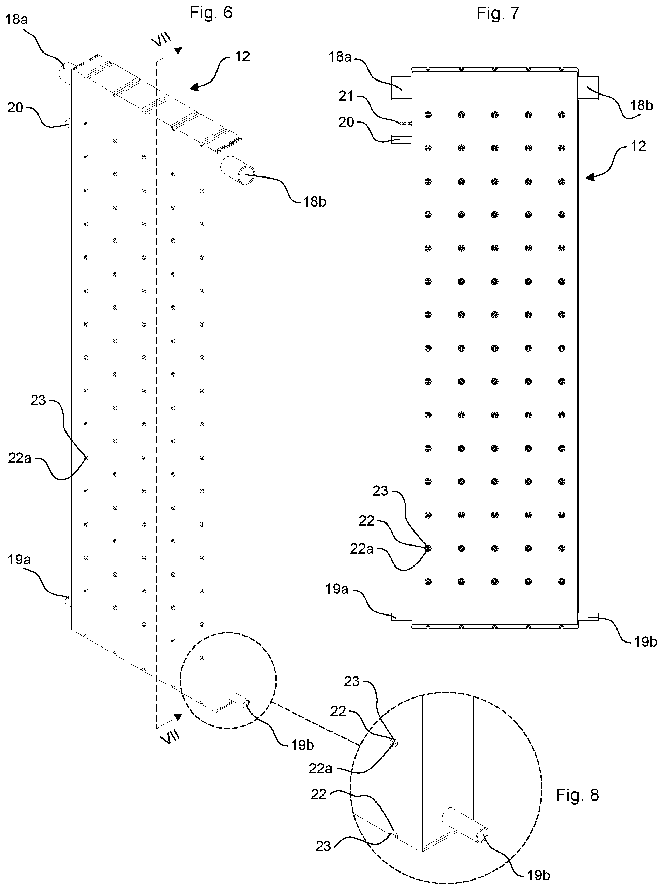

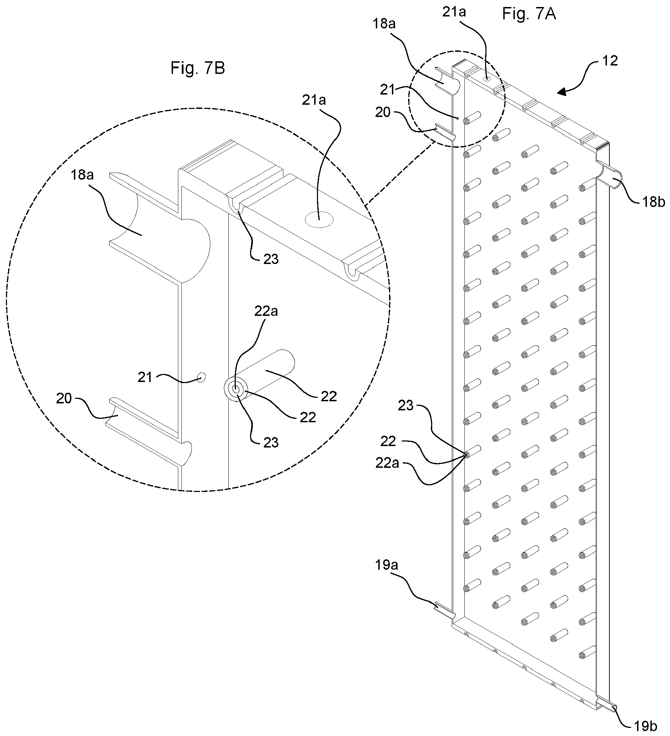

Figure 6 and Figure 7 show axonometric and front views of the tank, which generally has the shape of a parallelepiped like the cage into which it is inserted.

It therefore has a rectangular base whose short side represents the thickness (or depth) which is such as to be contained within the frame.

Generally the depth range is between 4 cm and 29 cm.

The tank 12, as shown in Figures 6, 7, 7A, 7B and 8, has holes 22.

These holes are in the form of transverse channels 22 which cross the entire thickness of the tank and which form, for example, circular apertures (22a), through which the tubular spacers 16 of the case (11b) pass.

Gaskets 23, made of rubber, for example, may optionally be inserted between the tubular spacers 16 and the walls of the channels of the tank 22 to facilitate the insertion of the spacers 16 and to reduce the effects of vibrations and noise due to the flow of water inside the tank 12.

In particular, the tank forms said channels 22 distributed over its surface and connecting the front face to the rear face.

With reference for example to Figures 7A, 7B and 8, a hole (22a) represents the access to the channel 22. The channel 22 develops orthogonally to the rear and front walls to which it connects so that starting for example from the rear wall (see Figures 7A and 7B), it connects to the front face.

The channel therefore emerges on said two faces through the hole (22a) which is present on both faces.

In this way, the tubular spacer 16 is inserted into the tank through this channel, coming out from the opposite side.

The internal volume of the tank is therefore distributed with such channels 22 which connect the front face to the rear face.

The tank 12 is also provided with upper connecting pipes (18a) and (18b), lower connecting pipes (19a) and (19b), which obviously give access to relative access apertures to the tank to allow it to be filled and/or emptied.

There may also be an optional additional pipe (20) for filling through a float valve.

When the stored water is kept at atmospheric pressure, the air vent function can be performed by the upper connecting pipes (18a) and (18b) while, in the event of pressurized water storage, the air can be vented by means of devices of the known types which can be easily inserted into the top of the tank (12), in which there may be fittings (21a) for the connection of venting pipes or automatic vents of the known types.

There may also be optional fittings for the insertion of probes (21), for example level and/or temperature probes.

All the integrated pipes (18a) (18b) (19a) (19b) 20 should preferably be made of the same material as the tank 12, for example by extrusion. The measurements and characteristics of the tank 12 may vary according to requirements. The material for the tank 12 is preferably high-density polyethylene, or alternatively stainless steel or hot-dip galvanized steel, although other suitably sized materials can also be used.

In use, therefore, a tank is placed inside the frame, thus obtaining a module ready for installation that can optionally be connected in series with other modules.

In particular, the tubular spacers 16 (named in this description as also *"elongated elements"* or *"fixing pins"*) are inserted in the channels 22 from the side of the tank that rests on the case. The said spacers come out from the opposite side of the tank, thereby allowing the fixing of the cover (11a) to the case (11b) through the said spacers exiting from the said channels and connected with the cover.

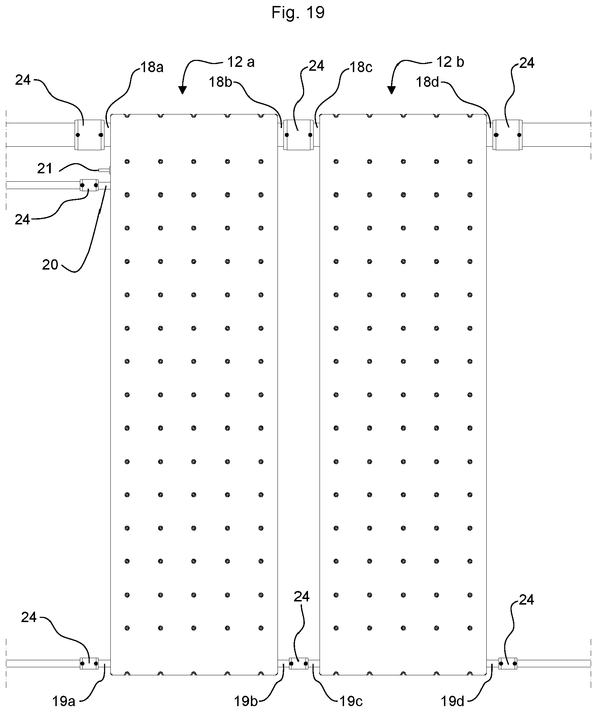

A schematic example of an embodiment of the invention, indicative but not exhaustive, is represented in Figure 19, in which two tanks (12a) and (12b) are connected in series, with a direct supply to the first tank (12a).

Two connections (24), for example with electro-weldable sleeves of the known types, are made between the two tanks (12a) and (12b): one between the upper connecting pipes (18b) and (18c); the other between the lower connecting pipes (19b) and (19c). Both connections 24 between the two tanks (12a) and (12b) allow the free flow of water from tank (12a) to tank (12b) according to the principle of communicating vessels.

In relation to this connection diagram, the following functional diagrams for supplying the water storage system are possible, by way of example, but not limited to:
- from the upper connecting pipe (18a), for example downstream of a rainwater recovery system, with free flow of incoming water;
- from the lower connecting pipe (19a), for example with mains water, the inlet flow of which is managed automatically by a motorized valve controlled by level probes placed inside the first tank (12a);
- from the additional pipe 20, for example with mains water, the inlet flow of which is automatically managed by a float valve placed inside the first tank (12a).

The following conditions may also occur in relation to the above examples:
- in the case of supply from the upper connecting pipe (18a), excess water can flow from the upper connecting pipe (18d) towards the drainage system; the bottom discharge function can be performed by one of the two lower connecting pipes (19a) or (19d) or possibly by both, by means of simple shut-off valves of the known types; the additional pipe (20), the fittings for the insertion of probes (21) and one of the following lower connecting pipes (19a) or (19d) may not be necessary; in the case of storage at atmospheric pressure, the upper connecting pipes also perform an air venting function;
- in the case of supply from the lower connecting pipe (19a), the bottom discharge function can preferably be performed by the lower connecting pipe (19d), by means of a simple shut-off valve of the known types; at least one of the two upper connecting pipes (18a) or (18d) must be used for air venting or, alternatively, a special vent must be made on the top of at least one of the two tanks (12a) and/or (12b); at least the fittings for the insertion of the level probes (21) are necessary, in order to control the motorized valve of the circuit; the additional pipe (20) may not be necessary;
- in the case of supply from the additional pipe (20), the bottom discharge function can be performed by one of the two lower connecting pipes (19a) or (19d) or possibly by both, by means of simple shut-off valves of the known types; at least one of the two upper connecting pipes (18a) or (18d) must be used for air venting or, alternatively, a special vent must be made on the top of at least one of the two tanks (12a) and/or (12b); provision must be made for the insertion of a float valve of the known types.

Other system layouts are possible, such as the combination of two supply systems, or the configuration of the position and type of probes. Furthermore, the diameters and types of connections of the various integrated pipes (18a) (18b) (19a) (19b) (20) may vary according to the project flow rates.

Furthermore, in the event of pressurized water storage, it would be sufficient to connect the tanks 12 in series with a single connecting pipe and to provide a venting system of the known types.

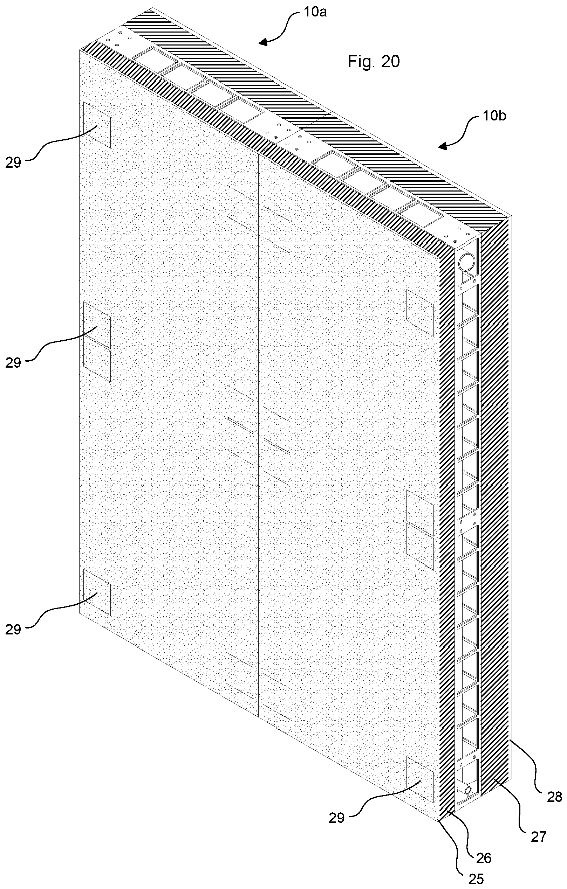

Another schematic example of an embodiment of the invention, indicative but not exhaustive, is represented in Figure 20, in which two modules (10a) and (10b) are connected in series, with a sheet of heat-insulating material 26 plus a sheet of plasterboard 25, for example, coupled on the internal side and/or a sheet of heat-insulating material 27 plus a finishing panel for exteriors 28, for example, coupled on the external side.

In addition, fittings can be provided for the opening of technical rooms 29 for the integration of wall-mounted technological systems of the known types.

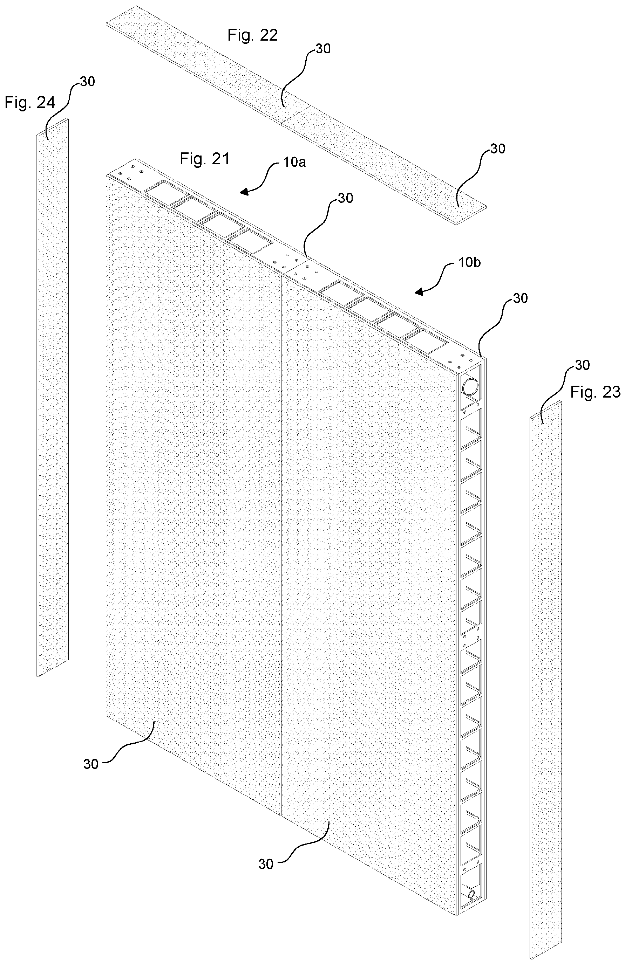

Another schematic example of an embodiment of the invention, indicative but not exhaustive, is represented in Figure 21, in which two modules (10a) and (10b) are connected in series, closed on the two faces with closing panels 30, for the construction of internal partition walls, for example.

Another embodiment of the invention is shown in Figure 22, Figure 23 and Figure 24, where finishing panels 30 are proposed for closing the other sides of the modules (10a) and (10b), in the event of making a wall in an external space or with the other sides visible.

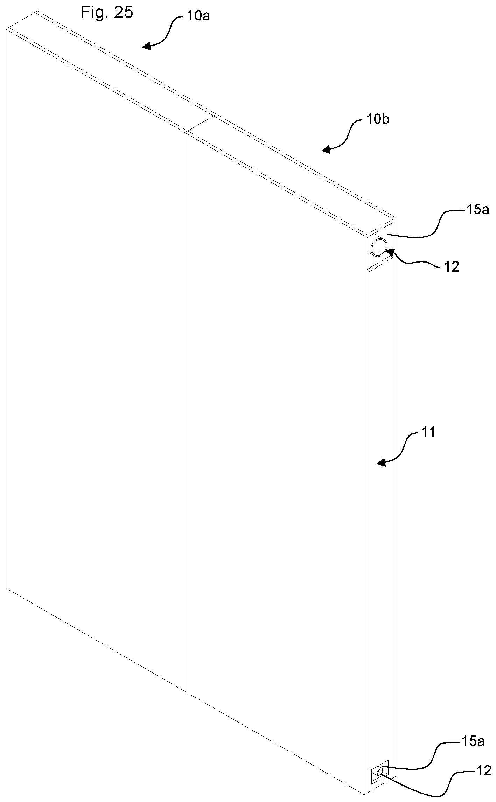

Last but not least, another schematic example of an embodiment of the invention, indicative but not exhaustive, is represented in Figure 25, where the external walls of the frame 11 can be made of wooden panels and have technical apertures (15a) only in correspondence with the crossings of pipes or other systems.

The present invention has been described above with reference to preferred embodiments, although there may be other embodiments which pertain to the same inventive core, as defined by the scope of the claims set out below.

In an example of installation in a wall of an existing house, for example inside a vertical wall, the module is prepared by inserting the tank 12 in the frame 11, thereby forming the containment cage.

If there is only one module, the module is inserted into the recess or cavity obtained in the existing wall and the tank pipes are connected so that it can receive and fill with water, for example rainwater, to then supply other users; connections are also made for the water to drain and therefore the tanks to empty, and for air venting.

The wall is then closed up.

In another installation example, in the case of the construction of a new wall of a new building, in which several modules 10 connected in series are to be inserted, the modules 10 are fastened by anchoring the frames (11) to the building structure, the frames 11 are joined in series and the tanks 12 are connected in series.

The water supply and drainage pipes, venting systems (where required), probes and any other devices of the known types are then connected, after which the internal and external faces of the wall are completed.

The structure of the frame, preferably made of steel, contributes to the structural reinforcement of the external or internal wall.

In the case of two or more modules in series during installation, care must be taken to connect the modules together, and therefore to structurally connect the frames to each other and to place the tanks in fluid communication, in particular in liquid communication.

The existing wall is then closed up or the new wall is completed.

According to this solution, house walls can be used to contain and therefore hide these modules as described.

The present invention can be applied vertically in vertical walls but obviously also horizontally in floors and roofs, with the term "walls" as used in this description meaning both classic vertical walls and also floors and/or roofs.

The term "place in fluid communication" means a possible passage of fluid between two elements (the two tanks in particular) and, equally, "place in liquid communication" means a possible passage of liquid between two elements, the two tanks in particular.

## Claims

1. A modular prefabricated water tank system (10) suitable for integration into a wall, said system (10) comprising a frame (11) and **characterized in that** the system further comprises a water tank (12) separate from the frame and which can be placed inside said frame in such a way that, when the tank is placed inside the frame, said frame and the tank form a single prefabricated module that can be installed inside a wall.

2. The system according to claim 1, wherein the frame is made of steel and/or wherein the tank is made of high-density polyethylene.

3. The system according to claim 1 or 2, wherein two or more of said prefabricated modules can be connected to each other in series, preferably by connecting a frame to a subsequent frame and at the same time connecting the tanks contained in said frames to each other in fluid communication.

4. The system according to one or more of the previous claims, wherein said frame (11) consists of a front cover (11a) and a case (11b) open at the front and to which said front cover (11a) is fastened in order to close the case and shape the frame, said case comprising a rear wall placed in front of the front aperture and a plurality of elongated elements (16) distributed over the rear wall of the case and which rise from the rear wall of the case towards the front aperture, said tank (12) shaping a plurality of holes (22) disseminated in such a way that, when the tank is placed inside said case, each one of said elongated elements (16) fits into a respective hole (22) allowing the tank to be constrained to the case.

5. The system according to claim 4, wherein said holes (22) are in the form of pass-through channels (22) which connect the front face of the tank to the rear face and with the elongated elements in the form of tubular elements, each one suitable for being inserted into one said pass-through channel, each tubular element (16) crossing the entire relative channel (22) into which it is inserted in such a way that one of its ends comes out of it and reaches the front cover (11a) so that the front cover can be fastened to the case (11b), preferably said channels (22) exit orthogonally from the rear face of the tank, which rests on the inside of the case during use, and are directed up to orthogonally reach the front face of said tank by passing inside the containment volume of the tank, said channels thus emerging on said front and rear faces through the relative holes in such a way as to allow the tank to be fastened in the case (11b) by inserting the elongated elements (16) into said channels.

6. The system according to claim 4 or 5, wherein the front cover (11a) has the shape of a sheet with a structural mesh interspersed with lightening apertures (15) or, alternatively, without lightening apertures (15) .

7. The system according to one or more of the previous claims, wherein the front cover is provided with holes (13) centered with said elongated elements (16) of the case (11b) in such a way as to allow said cover to be fastened to the case by means of self-locking screws or bolts or, alternatively, it is without holes, providing a surface suitable for spot welding.

8. The system according to one or more of the previous claims, wherein said frame (11) has a parallelepiped shape.

9. The system according to one or more of the previous claims, wherein said tank (12) comprises at least one upper aperture to which an upper connecting pipe (18a, 18b) is connected and at least one lower aperture to which a lower connecting pipe (19a, 19b) is connected, preferably two upper apertures being provided to which an upper connecting pipe (18a) and (18b) is connected to each one respectively, and two lower apertures to which a lower pipe is connected to each one respectively, even more preferably wherein an additional pipe (20) is also included and/or the tank is equipped with fittings for the insertion of one or more probes (21).

10. The system according to one or more of the previous claims, wherein the case (11b) is box-shaped and is composed of five rectangular-shaped sheets with a structural mesh interspersed with lightening apertures (15), equipped on the upper and lower sides with holes (17) allowing it to be anchored to building elements, preferably horizontal building elements, and equipped on the right and left sides with holes (14) to allow it to be connected in series to other modules (10).

11. The system according to one or more of the previous claims, wherein the elongated elements (16) have a tubular shape with internal thread suitable to allow the cover (11a) to be fastened to the case (11b) with self-locking screws or bolts, or alternatively with said tubular spacers forming a support for the spot welding of the cover (11a).

12. The system according to one or more of the previous claims, wherein the tank (12) includes:
- one or more upper integrated connecting pipes (18a) (18b);
- one or more lower integrated connecting pipes (19a) (19b);
- a plurality of channels (22) which, exiting orthogonally from the rear face of the tank, which rests on the inside of the case during use, and is directed up to orthogonally reach the front face by passing inside the containment volume of the tank, said channels thus emerging on said front and rear faces through the relative holes in such a way as to allow the tank to be fastened in the case (11b) by inserting the elongated elements (16) into said channels;
- gaskets (23) made of rubber, for example EPDM, suitable for lining the face of said channels (22) to facilitate the insertion of the elongated elements (16) ;
- an additional integrated connecting pipe (20) to allow automatic filling by means of a float valve;
- housings for the insertion of one or more probes (21), for example level and/or temperature and/or venting probes.

13. A method including:
- the assembly of at least one modular prefabricated water tank system in accordance with one or more of the preceding claims from 1 to 12, in such a way as to obtain the prefabricated module and;
- the subsequent preparation of the prefabricated module obtained inside a wall.

14. The method, according to claim 13, which includes the following phases:
- preparing the parts making up the frame (11);
- insertion of the tank (12) in the case (11b) of the frame by inserting the elongated elements (16) in the holes (22) of the tank (12);
- fastening the cover (11a) to the case, for example by screwing it with self-locking screws or bolts or by spot welding.

15. The method, according to claim 13 or 14, wherein the phase of connecting two or more modules to each other in series is included, preferably wherein the integrated pipes (18a) (18b) (19a) (19b) (20) in the tank (12) are connected with electro-weldable sleeves (24) .
